(19) **Europäisches Patentamt European Patent Office Office européen des brevets**

(11) **EP 4 708 785 A1**

(12) **EUROPEAN PATENT APPLICATION**

(43) Date of publication:
**11.03.2026 Bulletin 2026/11**

(21) Application number: **25199903.3**

(22) Date of filing: **03.09.2025**

(51) International Patent Classification (IPC):
***H04L 25/02*** *(2006.01)*

(52) Cooperative Patent Classification (CPC):
**H04L 25/0228; H04L 25/0212;** H04L 25/0226

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **05.09.2024 US 202418825499**

(71) Applicant: **Apple Inc.**
**Cupertino, CA 95014 (US)**

(72) Inventors:
- **AKHTAR, Auon Muhammad**
  **Cupertino, 95014 (US)**
- **VASHI, Prashant H.**
  **Cupertino, 95014 (US)**

(74) Representative: **COPA Copenhagen Patents**
**Rosenvængets Allé 25**
**2100 Copenhagen Ø (DK)**

(54) **LOW COMPLEXITY TIME DOMAIN-BASED CHANNEL ESTIMATION TECHNIQUES**

(57) Techniques are provided for channel state estimation. An example method can include processing a set of signals comprising a first noisy pilot signal, a second noisy pilot signal, and noisy message signal. The method can further include determining a first noisy channel estimate based on the first noisy pilot signal and a second noisy channel estimate based on the second noisy pilot signal. The method can further include determining a first de-noised channel estimate based on the noisy pilot signal channel estimate and the second noisy pilot signal channel estimate. The method can further include determining a de-noised message signal based on the first de-noised channel estimate.

100→

**FIG. 1**

EP 4 708 785 A1

## Description

### CROSS-REFERENCES TO RELATED APPLICATIONS

This application claims benefit of and priority under 35 U.S.C. 119(e) to U.S. Patent Application No. 18/825,499, titled "LOW COMPLEXITY TIME DOMAIN-BASED CHANNEL ESTIMATION TECHNIQUES," filed September 5, 2024, which is herein incorporated by reference in its entirety for all applicable purposes.

### BACKGROUND

Cellular communications can be defined in various standards to enable communications between a user equipment and a cellular network. For example, a long-term evolution (LTE) network and Fifth generation mobile network (5G) are wireless standards that aim to improve upon data transmission speed, reliability, availability, and more.

### BRIEF DESCRIPTION OF THE DRAWINGS

FIG. 1 is an illustration of an example channel estimation system, according to one or more embodiments.

FIG. 2 is an illustration of an example channel estimation system, according to one or more embodiments.

FIG. 3 is an illustration of an example channel estimation unit, according to one or more embodiments.

FIG. 4 is an illustration of an example noisy signals and de-noise signals, according to one or more embodiments.

FIG. 5 is an illustration of an example noisy signal and denoised signal, according to one or more embodiments.

FIG. 6 is an illustration of an example interpolation of channel estimates, according to one more embodiments.

FIG. 7 is an illustration of an example process for channel estimation in the time domain, according to one more embodiments.

FIG. 8 is an illustration of an example process for channel estimation in the frequency domain, according to one more embodiments.

FIG. 9 is an illustration of an example of receive components, in accordance with some embodiments.

FIG. 10 is an illustration of an example of a user equipment (UE), in accordance with some embodiments.

FIG. 11 is an illustration of an example of a network node, in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B); and the phrase "based on A" means "based at least in part on A," for example, it could be "based solely on A" or it could be "based in part on A."

The following is a glossary of terms that may be used in this disclosure.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "base station" as used herein refers to a device with radio communication capabilities, that is a network component of a communications network (or, more briefly, a network), and that may be configured as an access node in the communications network. A UE's access to the communications network may be managed at least in part by the base station, whereby the UE connects with the base station to access the communications network. Depending on the radio access technology (RAT), the base station can be referred to as a gNodeB (gNB), eNodeB (eNB), access point, etc.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

Channel estimation can include techniques for estimating the characteristics of a wireless channel between a transmitter and a receiver. Channel estimation techniques can be used to estimate the effects of a transmission medium (e.g.., a wire, air and other media) on a communication signal and compensate for the effects. These effects can include path loss, Doppler shifts, noise, multipath propagation, and other effects. Channel estimation techniques can be used for broadcast communications, in which a transmission can be to multiple receivers. Channel estimate techniques can also be used unicast communications in which a transmission is directed to a single receiver. One channel estimation technique is the use of pilot signals, which includes embedding a known sequence (e.g., pilot signal) into a communication signal that is transmitted to a receiver. The receiver can compare the received sequence the known sequence to determine the channel's effects on the communication signal.

For satellite communications system, channel estimation can be critical to the system's performance. In a typical use case, a satellite communication system can be used in instances that a communication device (e.g., a user equipment) is in a remote off-grid location. It can be typical that while in these off-grid locations, there is no charging station nearby, and therefore conservation of battery power can be a relevant issue. Pilot signal techniques can be used for channel estimation for satellite communication systems. However, the use of pilot signals can require additional power than can drain a battery further.

For satellite systems that uses a single carrier frequency to transmit a signal to a user equipment, many typical issues can be predicted and pre-compensated for, such as delay spread, frequency offsets, and sampling clock offsets. However, one issue, additive white Gaussian noise (AWGN) can contaminate a pilot signal, such that after comparing a contaminated received sequence with the known sequence, the receiver can make an inaccurate channel estimation. If the receiver makes an inaccurate channel estimation, it can compensate its signal processing incorrectly. This imperfect channel estimation can affect the performance of single antenna (e.g., single-input single output (SISO)) systems and multi-antenna (e.g., multiple-input multiple-output (MIMO) systems. Conventional channel estimation techniques that use pilot signals do not require removal of the AWGN from the pilot signal. The conventional techniques can lead to higher signal to noise (SNR) ratio requirements to achieve acceptable block error rate (BLER) or acceptable bit error rate (BER). Therefore, improved channel estimation techniques that can account for AWGN can be desired. Furthermore, due to sparse pilot locations inwaveform design, and the need to conserve battery power, it can be desired to design a low complexity channel estimation technique, that improves channel estimation, and can achieve this objective with minimal computational overhead.

The embodiments herein address the above-referenced issues by providing techniques for a low complexity channel estimation technique that can reconstruct a channel after minimizing noise in a time domain pilot estimate. For example, a computing system can be configured to identify noisy pilot signals from a received communication. The computing system can determine noisy pilot estimates from the noisy pilot signals. The computing system can further determine de-noised channel estimates from the noisy channel estimates using a convolution-based moving average. The computing system can then use linear interpolation to determine a channel estimate for a message included in the communication. The computing system can further use the channel estimate to de-noise and reconstruct the original message. The embodiments herein provide a low complexity channel estimation technique that can be used in conjunction with satellites systems and conserve battery life.

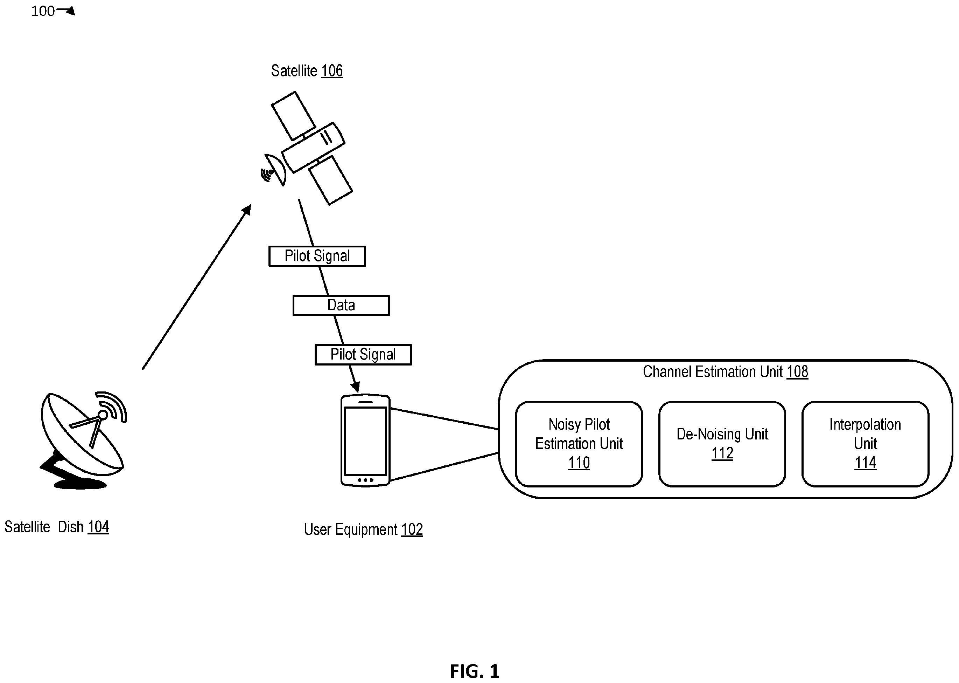

FIG. 1 is an illustration 100 of an example channel estimation system, according to one or more embodiments. A satellite communication system can include a combination of ground stations (e.g., user equipment (UE) 102, satellite dish 104) and non-terrestrial satellites (e.g., satellite 106) by which radio frequency (RF) signals can be transmitted from one ground station to another ground station. For example, the satellite 106 can be used to relay RF communications between the user equipment 102 and the satellite dish 104 (e.g., a base station), which are located a large distances from one another. As illustrated, the satellite dish 104 has transmitted a message via an uplink (UL) transmission to the satellite 106, which can relay the message to the UE 102 via a downlink (DL) transmission. The satellite 106 can be a transparent or a regenerative satellite. In case of a transparent satellite, the satellite dish 104 can embed pilot signals (e.g., reference signals such as a demodulation reference signal DM-RS, channel state information reference signal CSI-RS), or the like) into the transmitted message for channel estimation. In case of regenerative satellite, the satellite 106 can embed the aforementioned pilot signals into the DL transmissions. A pilot signal can be, for example, a reference signal with known characteristics. For a time domain waveform, the satellite 106 can embed the pilot signals in an equally spaced pattern. For example, the satellite 106 can embed the pilot signals at equally spaced time points. In the frequency domain, the satellite 106 can embed the pilot signals in subcarriers. In some embodiments, each pilot signal can be represented as a complex number to indicate the phase and magnitude of the pilot signal. The message data can be located between two pilot signals.

In some instances, the DL transmission can be affected by the channel, which in this illustration is an over-the-air (OTA) channel from the satellite 106 to the UE 102, such that there is signal degradation between the satellite 106 and the UE 102. Furthermore, in some instances, the UE 102 may be located in a remote position, such that charging the UE's battery may be difficult. Therefore, it can be desirable to utilize a channel estimation technique that conserves the UE's battery life.

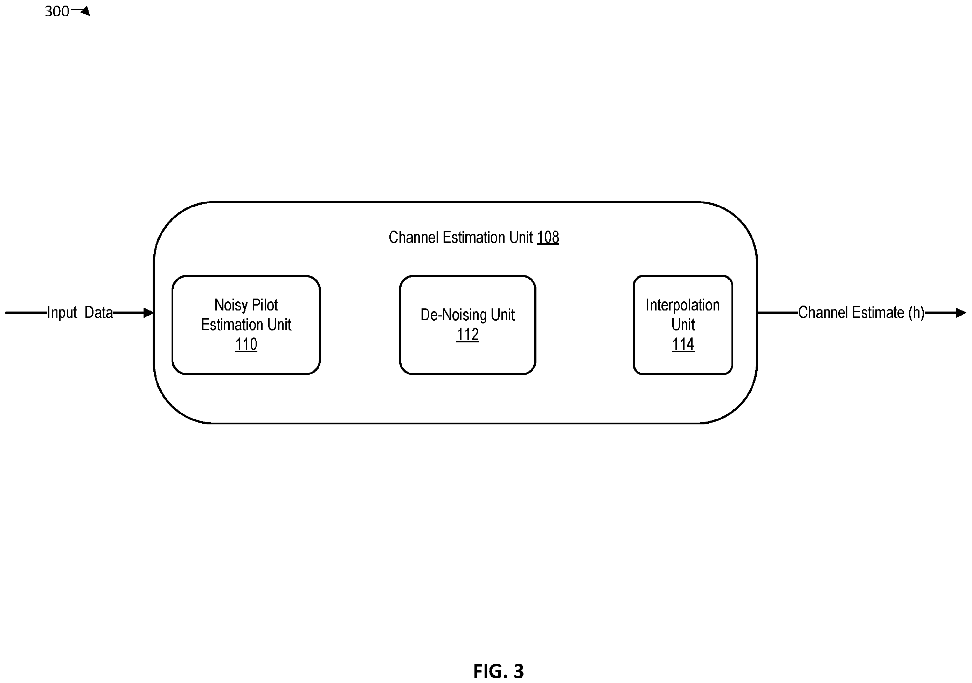

As illustrated, UE 102 can include a channel estimation unit 108, that includes a noisy pilot estimation unit 110, a de-noising unit 112, and an interpolation unit 114 for channel estimation. The channel estimation unit 108 can be configured to receive signals that include pilot signals and message signals (e.g., the message transmitted from the satellite dish 104 to the satellite 106 and relayed to the UE 102). As the pilot signals can be evenly spaced, the noisy pilot estimation unit 110 can identity the pilot signals from the message signals based on timing patterns. The noisy pilot estimation unit 110 can further make a channel estimation for each of the identified noisy pilot signals. The noisy pilot channel estimates can be transmitted to the de-noising unit 112 that can then use an averaging-based technique on two or more noisy pilot channel estimates to de-noise the noisy channel estimates. For example, the de-noising unit 112 can use a moving window to identity a set of noisy pilot channel estimates and use a convolution operation to determine an average of noisy pilot channel estimates to generate de-noised channel estimates. The de-noised channel estimates can be transmitted to the interpolation unit 114. The interpolation unit 114 can perform an interpolation operation to determine a channel estimate for a noisy message signal that is situated between two de-noised channel estimates in the tine domain. The channel estimate can be used to de-noise the noisy message signal. The channel estimation unit 108 is described with more particularity with respect to FIGS. 3-6.

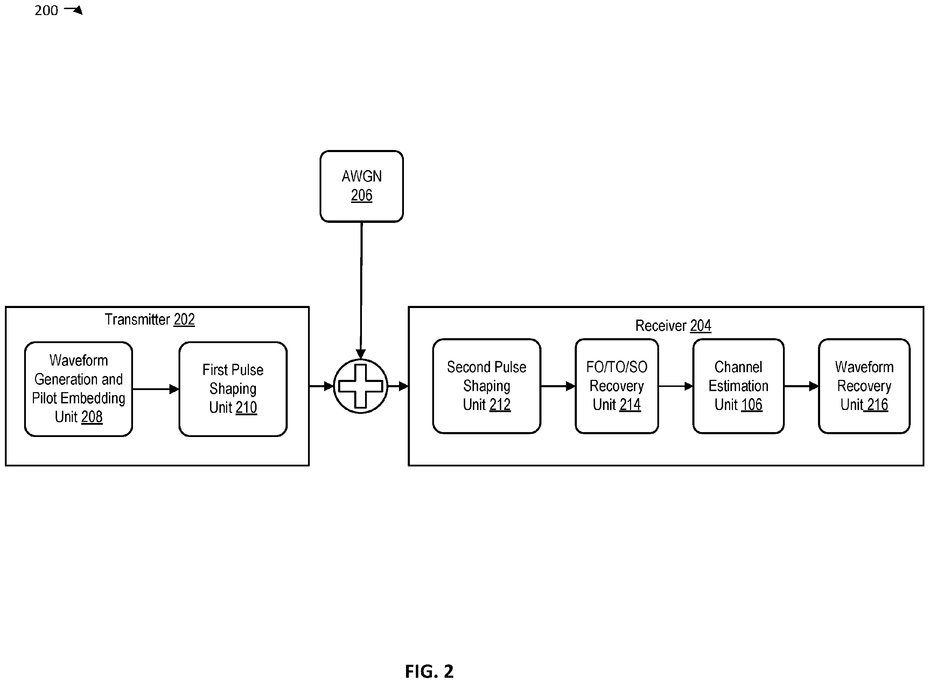

FIGS. 2-6 describe the low complexity channel estimation system with more particularity. FIG. 2 provides an overview of the transmitter and receiver elements of the low complexity channel estimation system. FIGS. 3-6 describe the channel estimation unit with more particularity.

FIG. 2 is an illustration 110 of an example channel estimation system, according to one or more embodiments. A transmitter 112 (e.g., satellite 106) can be configured to transmit a signal to a receiver 114 (e.g., user equipment 102). The transmitter 112 can include a waveform generation and pilot embedding unit 116 that can generate a waveform that includes message signals and pilot signals (e.g., reference signals). The pilot signals can be evenly spaced apart in the time domain. The pilot signal can further include defined characteristics that are known to the receiver 114. For example, the pilot signals can be embedded into between messages signals at every x units of time, at every y symbols and/or the like. The waveform with the embedded pilot signals can be passed to a first pulse shaping unit 210. Pulse shaping can include a signal processing technique to modify the waveform to optimize various characteristics. For example, the pulse shaping unit 111 can be used to shape the waveform to bandlimit the signal and to improve the signal-to-noise ratio (SNR) with matched filtering.

The transmitter 112 can transmit the signal to the receiver 114. Along the signal's path, the signal can become contaminated by noise (e.g., AWGN 116) which can reduce the signal's quality. The noisy signal can be received by the receiver 114. The noisy signal can be passed through a second pulse shaping unit 212 that can shape the signal's waveform to improve the channel estimation process. The second pulse shaping unit 212 can transmit the noisy signal to a frequency offset (FO), time offset (TO), and sampling offset (SO) recovery unit 214. The FO/TO/SO recovery unit 214 can estimate a FO based on the pilot signals, a cycle prefix correlation, statistical properties, or other technique. The FO/TO/SO recovery unit 214 can then use a local oscillator (LO) to adjust the frequency based on the estimation, or it can apply a phase shift to the received signal to remove frequency offset. The FO/TO/SO recovery unit 214 can estimate a TO between the transmitter 112 and the receiver 114. The FO/TO/SO recovery unit 214 can then adjust the sampling points to adjust the timing offset. The FO/TO/SO recovery unit 214 can estimate an SO based on the pilot signals, statistical properties, or other techniques. The FO/TO/SO recovery unit 214 can then adjust the user interpolation or resampling to adjust the sampling offset. The FO/TO/SO recovery unit 214 can then transmit the noisy signal to the channel estimation unit.

The channel estimation unit 108 can be described using FIGS. 3-6. FIG. 3 is an illustration 300 of an example channel estimation unit, according to one or more embodiments. The channel estimation unit 108 can receive input data. For example, the channel estimation unit 108 can receive the noisy signal from the FO/TO/SO recovery unit 214. The noisy signal can be received by the noisy pilot estimation unit 110.

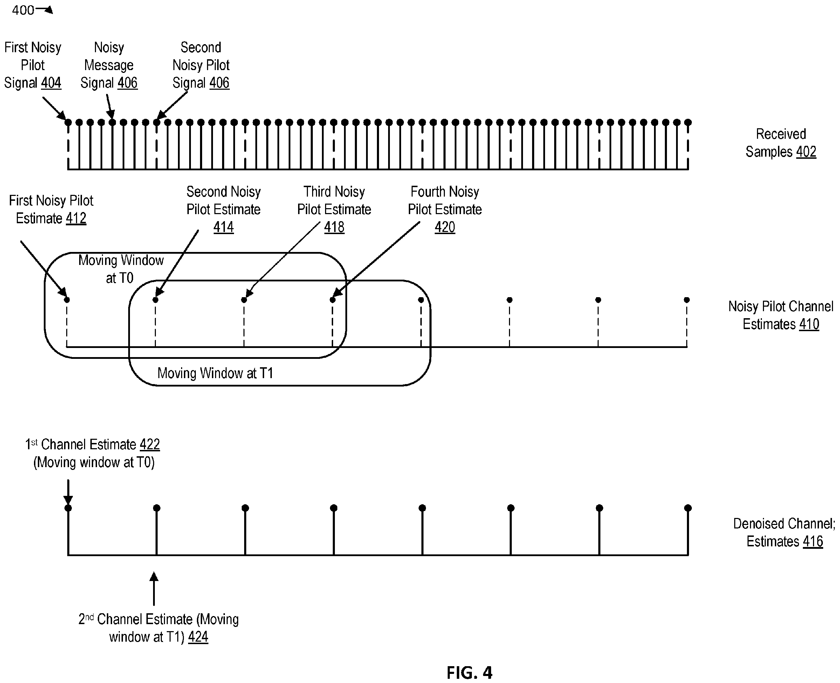

FIG. 4 is an illustration 400 of an example noisy signals and de-noise signals, according to one or more embodiments. Referring to FIG. 4, the input data can include received samples 402, which include noisy pilot signals and noisy message signals. For illustration purposes, the noisy pilot signals have been illustrated with dashed lines and the noisy message signals have been illustrated with solid lines. As illustrated, the noisy pilot signals are equally spaced as each surround seven message signals. Each noisy pilot signal and noisy message signal can represent a signal at a time point in the time domain. For example, the first noisy pilot signal 404 is followed by seven noisy message signals 408, which are followed by a second noisy pilot signal 406. It should be appreciated that there are seven message signals for illustration and in other instances there can be fewer or greater than seven noisy message signals.

The noisy pilot estimation unit 110 can identity the noisy pilot signals based on the known timing pattern (e.g., every x units of time, at every y symbols and/or the like). The noisy pilot estimation unit 110 can then generate noisy pilot channel estimates 410. For example, the noisy pilot estimation unit 110 can compare the received noisy pilot signals with known characteristics of the pilot signals. By analyzing the difference, the noisy pilot estimation unit 110 can estimate the channel's impulse response. The channel impulse response can characterize the channels effects on the pilot signal (e.g., path loss, Doppler shifts, noise, multipath propagation, and other effects). As illustrated, each noise pilot signal corresponds to a noisy pilot estimate. For example, the first noisy pilot signal 404 can correspond to a first noisy pilot estimate 412. The second noisy pilot signal 406 can correspond to a second noisy pilot estimate 414.

The de-noising unit 112 can access the noisy pilot channel estimates 410 and denoise the channel estimates. The de-noising unit 112 can determine a window length for capturing two or more noisy pilot channel estimates 410 and perform a convolution-based moving average. As illustrated, the window length is four. However, it should be appreciated that in other instances, the window length can be less than or greater than four. The de-noising unit 112 can use a moving average operation that includes a statistical technique for creating averages based on subsets of the noisy pilot channel estimates 410. A moving average can be determined based on convolving an input (e.g., noisy pilot channel estimates 410 ) with a window function, where the window function can define weights to be applied to the noisy pilot channel estimates 410, to generate the denoised channel estimates 416. The output of the convolution based moving average can be obtained by starting at the sample number and using the below formula:

$$\text{start\_sample} = (\text{window length})/2, \qquad (1)$$

where the scaling factor for the moving average can be adjusted based on the window length and the number of overlapping samples.

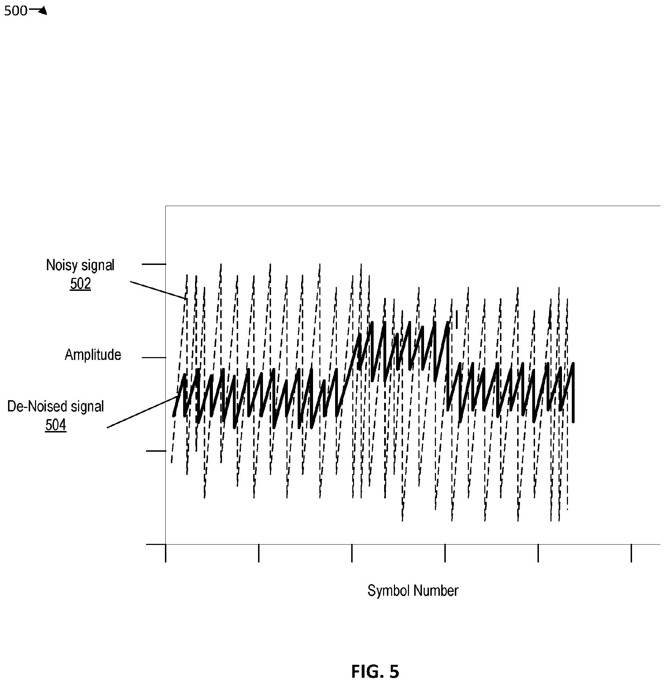

As illustrated, de-noising unit 11 can determine the first channel estimate based on noisy pilot estimates (e.g., first noisy pilot estimate 412, second noisy pilot estimate 414, third noisy pilot estimate 418, and fourth noisy pilot estimate 420) captured by the moving average window at T0. Similarly, the second channel estimate 424 can be determined based on the noisy pilot estimates captured by the moving window at T1, and so on. FIG. 5 is an illustration 500 of example noisy signal and denoised signal, according to one or more embodiments. The noisy signal is illustrated using a dashed line, whereas the de-noised signal 504 is illustrated using a bolded solid line. The illustration 500 is provided to indicate the effect of de-noising on the waveform of the pilot signal.

One issue for the convolution-based moving average is the fixed-point word size limit of, for example, int16 for performing the computations. The UE processor circuitry should not become saturated during the convolution process, as this can disrupt the channel estimation process. One option can be to store the current moving sum as a thirty-two bit signed number (int32). Then multiply the current moving sum by a reciprocal window length to determine a moving average, and saturate the results to thirty-two bits. This operation can generate a Q19.12 number, which can be rounded with a bias of six bits, and saturate to sixteen bits. This operation can result in a final number in a Q9.6 format. This can be the format, at which the rest of the demodulation operation is designed to operate.

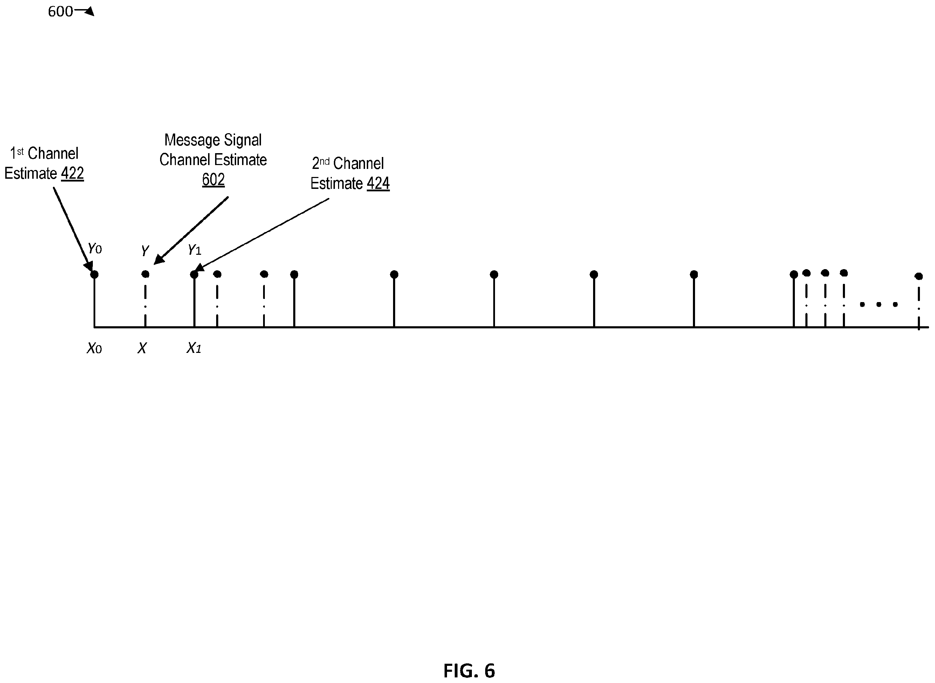

FIG. 6 is an illustration of an example interpolation of channel estimates, according to one or more embodiments. The interpolation unit 114 can use linear interpolation to determine the channel estimate for a noisy message signal (e.g., noisy message signal 408). As the interpolation units performance can be affected by noise level of a pilot signal, the de-noising process can be performed prior to the linear interpolation. As the pilot signals are transmitted at particular time points, and not continuously, linear interpolation can be used for channel estimation for points between the pilot signals. The interpolation unit 114 can rely on the following formula:

$$y = y_0 + \frac{(y_1 - y_0) - (x - x_o)}{x_1 - x_0}, \quad (2)$$

where y is the channel estimate for the message signal, $y_0$ is the first channel estimate 422, $y_1$ is the second channel estimate 424, x is the time point for the message signal channel estimate 602, $x_0$ is the time point for the first channel estimate 422, and $x_1$ is the time point for the second channel estimate 424. The interpolation unit 114 can determine a channel estimate for each noisy message signal between the first channel estimate 422 and the second channel estimate 424. Referring back to FIG. 4, as there are seven noisy message signals between the first channel estimate 422 and the second channel estimate 424, the interpolation unit 114 can determine seven message signal channel estimates.

Referring back to FIG. 2, the waveform recovery unit 216 can use the channel estimates of the noisy message signals to de-noise the message signals. For example, the waveform recovery unit 216 can respectively use the channel estimate for each noisy message signal and apply a deconvolution process to reconstruct the original signal transmitted by the transmitter 202.

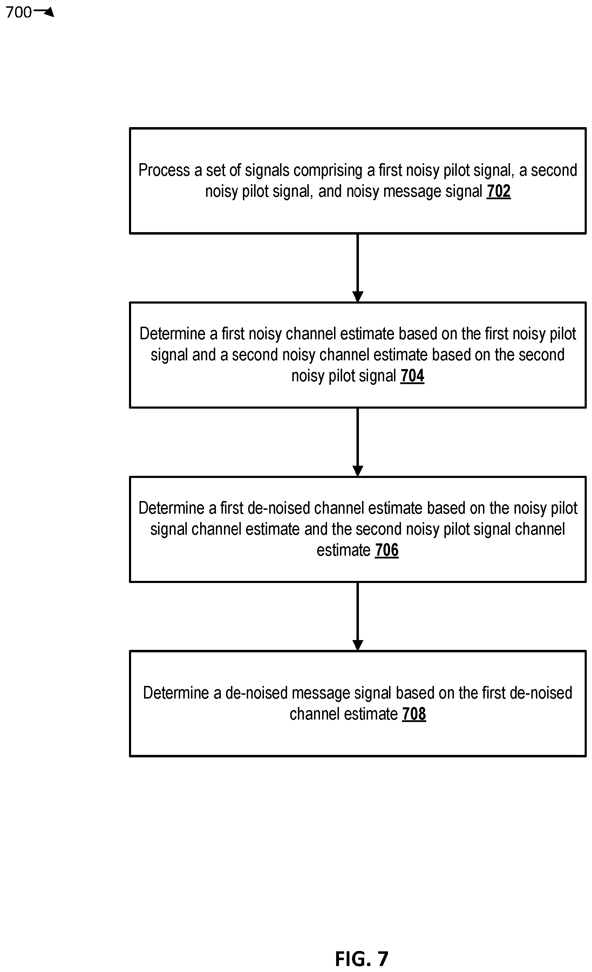

FIG. 7 is an illustration of an example process 700 for channel estimation in the time domain, according to one more embodiments. At 702, the process 700 can include a computing system (e.g., user equipment 102) processing a set of signals comprising a first noisy pilot signal (e.g., first noisy pilot signal 404), a second noisy pilot signal (e.g., second noisy pilot signal 406), and a noisy message signal (e.g., noisy message signal 408). For example, the computing system can identify a timing pattern for the set of signals. The first noisy pilot signal and the second noisy pilot signal can be identified based on the timing pattern. In some instances, the computing system can sample a set of signals received from a satellite to generate the set of signals. The sampling frequency for the sampling can based on the timing pattern for the first noisy pilot signal and a second noisy pilot signal.

The set of signals can be transmitted by a satellite using a single carrier communication system. Furthermore, the noise of the first noisy pilot signal and the second noisy pilot signal can be based on an AWGN.

At 704, the process 700 can include the computing system determining a first noisy channel estimate (e.g., first noisy pilot estimate 412) based on the first noisy pilot signal and a second noisy channel estimate based on the second noisy pilot signal.

At 706, the process 700 can include the computing system determining a first de-noised channel estimate (e.g., first channel estimate 422) based on the noisy pilot signal channel estimate and the second noisy pilot signal channel estimate.

At 708, the process 700 can include the computing system determining a de-noised message signal based on the first de-noised channel estimate. For example, the computing system can determine a channel estimate for the noisy message signal based on a linear interpolation of the first de-noised channel estimate and a second de-noised channel estimate. The de-noised message can further be based on the channel estimate for the noisy message signal. It should be appreciated that determining the de-noised message signal can include reconstructing the message signal as transmitted by a transmitter.

As indicated above, there can be multiple message signals. Therefore, the computing system can determine respective channel estimates for each message signal.

In some embodiments, the computing system can determine a first BLER or first BLE prior to processing the set of signals. The computing system can then determine a second BLER or second BLE after determining a channel estimate. The computing system can then transmit, to a satellite, a message to update a density of pilot signals for a downlink transmission.

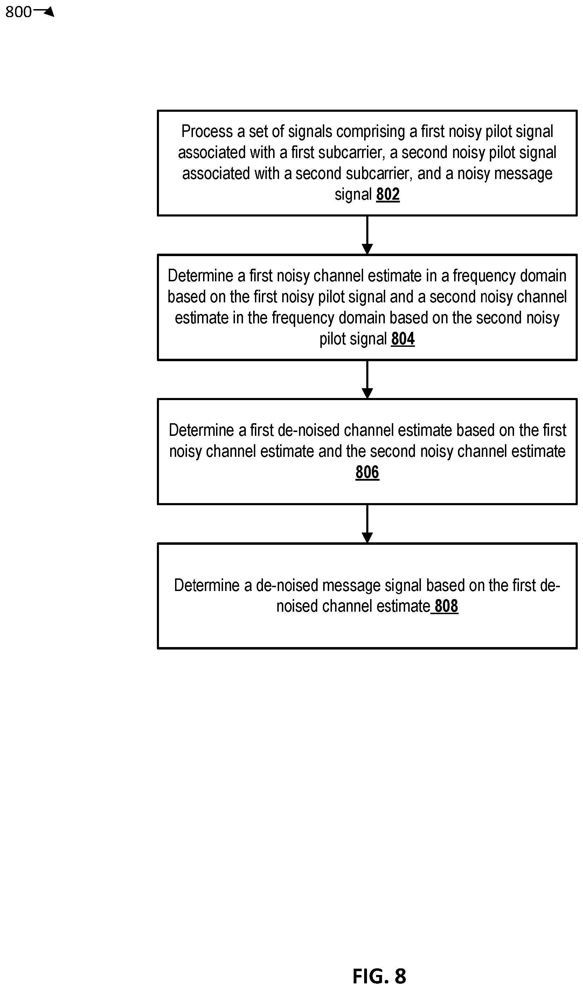

FIG. 8 is an illustration of an example process 800 for channel estimation in the frequency domain, according to one more embodiments. At 802, the process can include a computing system (e.g., UE 102) processing a set of signals comprising a first noisy pilot signal associated with a first subcarrier, a second noisy pilot signal associated with a second subcarrier, and a noisy message signal. The first noisy channel estimate can correspond to a first frequency response. The second noisy channel estimate corresponds to a second frequency response. The set of signals can be transmitted by a satellite using a multi-carrier communication system.

For example, a pilot signal can include pilot signal is a cell-specific reference signal (CRS), a demodulation reference signal (DM-RS), or a channel state reference signal (CS-RS). The computing system can determine a known pilot signal. The computing system can then compare the known pilot signal to the first noisy pilot signal. The computing system can then identify the first noisy pilot signal from the first subcarrier based on comparing the known pilot signal to the first noisy pilot signal.

In some instances, the set of signals are the time domain. In these instances, the computing system can process a set of orthogonal frequency-division multiplexing (OFDM) signals to convert the OFDM symbols from the time domain to the frequency domain.

At 804, the process 800 can include the computing system determining a first noisy channel estimate in a frequency domain based on the first noisy pilot signal and a second noisy channel estimate in the frequency domain based on the second noisy pilot signal.

At 806, the process 800 can include the computing system determining a first de-noised channel estimate based on the noisy pilot signal channel estimate and the second noisy pilot signal channel estimate.

At 808, the process 800 determining a de-noised message signal based on the first de-noised channel estimate. In some embodiments, the computing system can determine a first BLER or first BLE prior to processing the set of signals. The computing system can then determine a second BLER or second BLE after determining the third channel estimate. The computing system can then transmit, to a satellite, a message to update a density of pilot signals for a downlink transmission.

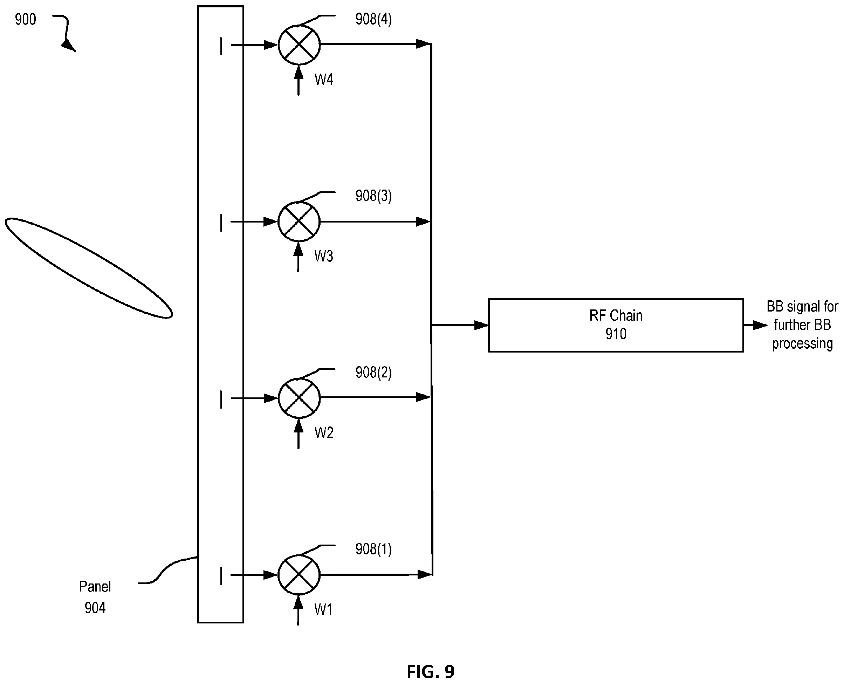

FIG. 9 illustrates receive components 900 of the UE 906, in accordance with some embodiments. The receive components 900 may include an antenna panel 904 that includes a number of antenna elements. The panel 904 is shown with four antenna elements, but other embodiments may include other numbers.

The antenna panel 904 may be coupled to analog beamforming (BF) components that include a number of phase shifters 908(1) - 908(4). The phase shifters 908(1) - 908(4) may be coupled with a radio-frequency (RF) chain 913. The RF chain 913 may amplify a receive analog RF signal, downconvert the RF signal to baseband, and convert the analog baseband signal to a digital baseband signal that may be provided to a baseband processor for further processing.

In various embodiments, control circuitry, which may reside in a baseband processor, may provide BF weights (e.g., W1 - W4), which may represent phase shift values, to the phase shifters 908(1) - 908(4) to provide a receive beam at the antenna panel 904. These BF weights may be determined based on the channel-based beamforming.

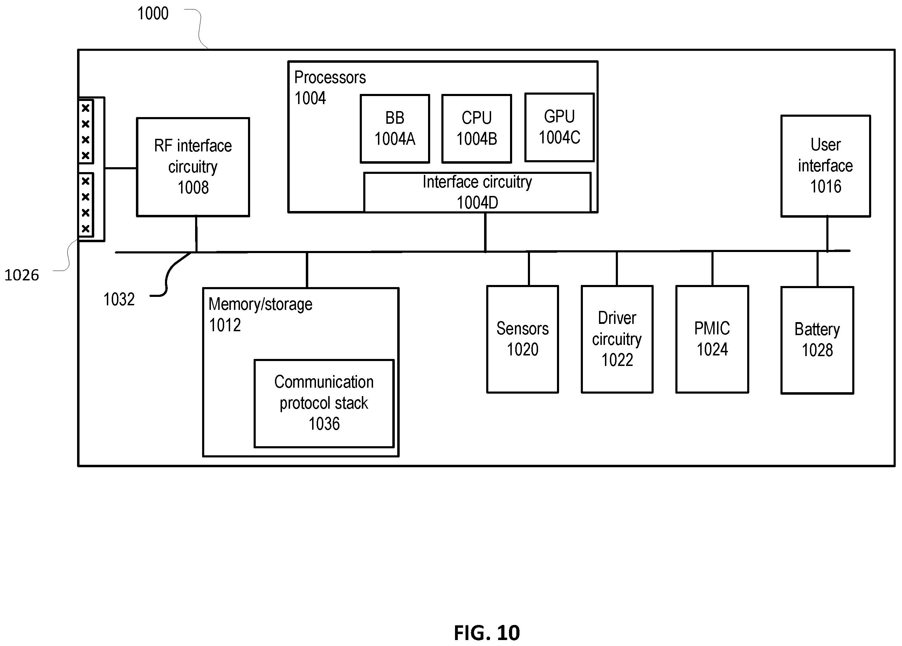

FIG. 10 illustrates a UE 1000, in accordance with some embodiments. The UE 1000 may be similar to and substantially interchangeable with UE 102 of FIG. 1.

The processors 1004 may include processor circuitry such as, for example, baseband processor circuitry (BB) 1004A, central processor unit circuitry (CPU) 1004B, and graphics processor unit circuitry (GPU) 1004C. The processors 1004 may include any type of circuitry or processor circuitry that executes or otherwise operates computer-executable instructions, such as program code, software modules, or functional processes from memory/storage 1012 to cause the UE 1000 to perform delay-adaptive operations as described herein. The processors 1004 may also include interface circuitry 1004D to communicatively couple the processor circuitry with one or more other components of the UE 1000.

In some embodiments, the baseband processor circuitry 1004A may access a communication protocol stack 1036 in the memory/storage 1012 to communicate over a 3GPP compatible network. In general, the baseband processor circuitry 1004A may access the communication protocol stack 1036 to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a NAS layer. In some embodiments, the PHY layer operations may additionally/alternatively be performed by the components of the RF interface circuitry 1008.

The baseband processor circuitry 1004A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The memory/storage 1012 may include one or more non-transitory, computer-readable media that includes instructions (for example, communication protocol stack 1036) that may be executed by one or more of the processors 1004 to cause the UE 1000 to perform various delay-PRACH operations described herein.

The memory/storage 1012 includes any type of volatile or non-volatile memory that may be distributed throughout the UE 1000. In some embodiments, some of the memory/storage 1012 may be located on the processors 1004 themselves (for example, memory/storage 1012 may be part of a chipset that corresponds to the baseband processor circuitry 1004A), while other memory/storage 1012 is external to the processors 1004 but accessible thereto via a memory interface. The memory/storage 1012 may include any suitable volatile or non-volatile memory such as, but not limited to, dynamic random access memory (DRAM), static random access memory (SRAM), erasable programmable read only memory (EPROM), electrically erasable programmable read only memory (EEPROM), Flash memory, solid-state memory, or any other type of memory device technology.

The RF interface circuitry 1008 may include transceiver circuitry and a radio frequency front module (RFEM) that allows the UE 1000 to communicate with other devices over a radio access network. The RF interface circuitry 1008 may include various elements arranged in transmit or receive paths. These elements may include, for example, switches, mixers, amplifiers, filters, synthesizer circuitry, and control circuitry.

In the receive path, the RFEM may receive a radiated signal from an air interface via antenna 1026 and proceed to filter and amplify (with a low-noise amplifier) the signal. The signal may be provided to a receiver of the transceiver that down-converts the RF signal into a baseband signal that is provided to the baseband processor of the processors 1004.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1026.

In various embodiments, the RF interface circuitry 1008 may be configured to transmit/receive signals in a manner compatible with NR access technologies.

The antenna 1026 may include antenna elements to convert electrical signals into radio waves to travel through the air and to convert received radio waves into electrical signals. The antenna elements may be arranged into one or more antenna panels. The antenna 1026 may have antenna panels that are omnidirectional, directional, or a combination thereof to enable beamforming and multiple input, multiple output communications. The antenna 1026 may include microstrip antennas, printed antennas fabricated on the surface of one or more printed circuit boards, patch antennas, or phased array antennas. The antenna 1026 may have one or more panels designed for specific frequency bands including bands in FR1 or FR2.

The user interface 1016 includes various input/output (I/O) devices designed to enable user interaction with the UE 1000. The user interface 1016 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators such as light emitting diodes (LEDs) and multi-character visual outputs, or more complex outputs such as display devices or touchscreens (for example, liquid crystal displays (LCDs), LED displays, quantum dot displays, and projectors), with the output of characters, graphics, multimedia objects, and the like being generated or produced from the operation of the UE 1000.

The sensors 1020 may include devices, modules, or subsystems whose purpose is to detect events or changes in their environment and send the information (sensor data) about the detected events to some other device, module, or subsystem. Examples of such sensors include inertia measurement units comprising accelerometers, gyroscopes, or magnetometers; microelectromechanical systems or nanoelectromechanical systems comprising 3-axis accelerometers, 3-axis gyroscopes, or magnetometers; level sensors; flow sensors; temperature sensors (for example, thermistors); pressure sensors; barometric pressure sensors; gravimeters; altimeters; image capture devices (for example, cameras or lensless apertures); light detection and ranging sensors; proximity sensors (for example, infrared radiation detector and the like); depth sensors; ambient light sensors; ultrasonic transceivers; and microphones or other like audio capture devices.

The driver circuitry 1022 may include software and hardware elements that operate to control particular devices that are embedded in the UE 1000, attached to the UE 1000, or otherwise communicatively coupled with the UE 1000. The driver circuitry 1022 may include individual drivers allowing other components to interact with or control various input/output (I/O) devices that may be present within, or connected to, the UE 1000. For example, driver circuitry 1022 may include a display driver to control and allow access to a display device, a touchscreen driver to control and allow access to a touchscreen interface, sensor drivers to obtain sensor readings of sensors 1020 and control and allow access to sensors 1020, drivers to obtain actuator positions of electro-mechanic components or control and allow access to the electro-mechanic components, a camera driver to control and allow access to an embedded image capture device, audio drivers to control and allow access to one or more audio devices.

The PMIC 1024 may manage power provided to various components of the UE 1000. In particular, with respect to the processors 1004, the PMIC 1024 may control power-source selection, voltage scaling, battery charging, or DC-to-DC conversion.

A battery 1028 may power the UE 1000, although in some examples the UE 1000 may be mounted deployed in a fixed location and may have a power supply coupled to an electrical grid. The battery 1028 may be a lithium ion battery, a metal-air battery, such as a zinc-air battery, an aluminum-air battery, a lithium-air battery, and the like. In some implementations, such as in vehicle-based applications, the battery 1028 may be a typical lead-acid automotive battery.

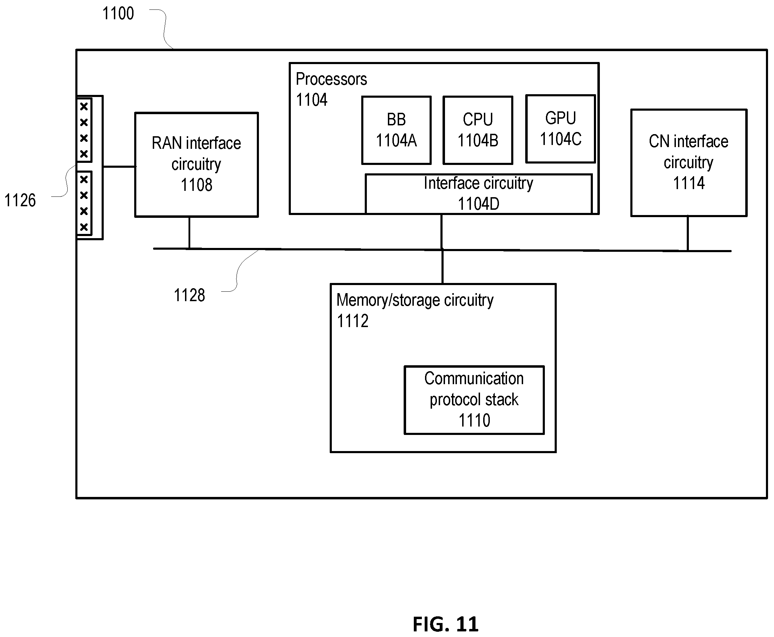

FIG. 11 illustrates a network device 1100 in accordance with some embodiments. The network device 1100 may be similar to and substantially interchangeable with base station or a device of the core network or external data network.

The network device 1100 may include processors 1104, RF interface circuitry 1108 (if implemented as a base station), core network (CN) interface circuitry 1114, memory/storage circuitry 1112, and antenna structure 1126.

The components of the network device 1100 may be coupled with various other components over one or more interconnects 1128.

The processors 1104, RF interface circuitry 1108, memory/storage circuitry 1112 (including communication protocol stack 1110), antenna structure 1126, and interconnects 1128 may be similar to like-named elements shown and described with respect to FIG. 10.

The processors 1104 may include processor circuitry such as, for example, baseband processor circuitry (BB) 1104A, central processor unit circuitry (CPU) 1104B, and graphics processor unit circuitry (GPU) 1104C. The processors 1104 may include any type of circuitry or processor circuitry that executes or otherwise operates computer-executable instructions, such as program code, software modules, or functional processes from memory/storage circuitry 1112 to cause the network device to perform delay-adaptive operations as described herein. The processors 1104 may also include interface circuitry 1104D to communicatively couple the processor circuitry with one or more other components of the network device 1100.

The CN interface circuitry 1114 may provide connectivity to a core network, for example, a 5th Generation Core network (5GC) using a 5GC-compatible network interface protocol such as carrier Ethernet protocols, or some other suitable protocol. Network connectivity may be provided to/from the network device 1100 via a fiber optic or wireless backhaul. The CN interface circuitry 1114 may include one or more dedicated processors or FPGAs to communicate using one or more of the aforementioned protocols. In some implementations, the CN interface circuitry 1114 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, or network element as described above in connection with one or more of the preceding figures may be configured to operate in accordance with one or more of the examples set forth below in the example section.

## Examples

In the following sections, further example embodiments are provided.

Example 1 can include a method comprising: processing a set of signals comprising a first noisy pilot signal, a second noisy pilot signal, and a noisy message signal; determining a first noisy channel estimate based on the first noisy pilot signal and a second noisy channel estimate based on the second noisy pilot signal; determining a first de-noised channel estimate based on the first noisy channel estimate and the second noisy channel estimate; and determining a de-noised message signal based on the first de-noised channel estimate.

Example 2 can include the method of example 1, wherein method further comprises:

determining a channel estimate for the noisy message signal based on a linear interpolation of the first de-noised channel estimate and a second de-noised channel estimate, wherein the de-noised message signal is further based on the channel estimate for the noisy message signal.

Example 3 can include the method of any of examples 1 or 2, wherein the method further comprises: identifying a second de-noised channel estimate based on a convolution-based moving average, wherein the de-noised message signal is further determined based on the second de-noised channel estimate.

Example 4 can include the method of example 3, wherein the method further comprises: determining a window length for a convolution-based moving average; and determining a scaling factor for the convolution-based moving average based on the window length, wherein the first de-noised channel estimate is based on the scaling factor.

Example 5 can include the method of any of examples 1-4, wherein processing the set of signals to identify the first noisy pilot signal and the second noisy pilot signal comprises: identifying a timing pattern for the set of signals, wherein the first noisy pilot signal and the second noisy pilot signal are identified based on the timing pattern.

Example 6 can the method of any of examples 1-5, wherein the set of signals is a first set of signals, and wherein the method further comprises: sampling a second set of signals to generate the first set of signals; wherein a sampling frequency for the sampling is based on a timing pattern for the first noisy pilot signal and a second noisy pilot signal.

Example 7 can include the method of any of examples 1-6, wherein the method further comprises: determining a first BLER prior to processing the set of signals; determining a second BLER after determining the de-noised message signal; and transmitting, to a satellite, a message to update a density of pilot signals for a downlink transmission.

Example 8 can include the method of any of examples 1-7, wherein a noise of the first noisy pilot signal is based on an AWGN.

Example 9 can include the method of any of examples 1-8, wherein the set of signals comprises a plurality of noisy pilot signals including the first noisy pilot signal and the second noisy pilot signal, and wherein the plurality of noisy pilot signals are equally spaced apart in a time domain.

Example 10 can include the method of any of examples 1-9, wherein determining the de-noised message signal comprises reconstructing a message signal as transmitted by a transmitter.

Example 11 can include the method of any of examples 1-10, wherein a plurality of noisy message signals are located between the first de-noised channel estimate and a second de-noised channel estimation, and wherein the method further comprises: determining a plurality of channel estimates based on the plurality of noisy message signals.

Example 12 can include the method of any of examples 1-11, wherein the set of signals is transmitted by a satellite using a single carrier communication system.

Example 13 can include the method of any of examples 1-12, wherein determining a de-noised message signal based on the first de-noised channel estimate is based on an interpolation operation using:

$$y = y_0 + \frac{(y_1 - y_0) - (x - x_o)}{x_1 - x_0},$$

where y is a channel estimate for a noisy message signal, $y_0$ is a first channel estimate, $y_1$ is a second channel estimate, x is a time point for the noisy message signal, $x_0$ is a time point for the first channel estimate, and $x_1$ is a time point for the second channel estimate.

Example 14 can include an apparatus comprising: processing circuitry configured to perform any of the steps of examples 1-13 and memory coupled to the processing circuitry, the memory configured to store signal information.

Example 15 can include one or more non-transitory computer-readable media having stored thereon a sequence of instructions which, when executed by one or more processors, cause processing circuitry to perform any of the steps of examples 1-13.

Example 16 can include an apparatus comprising: processing circuitry configured to: identify a first noisy pilot signal and a second noisy pilot signal from a set of signals, determine a first noisy pilot signal channel estimate based on the first noisy pilot signal and a second noisy pilot signal channel estimate based on the second noisy pilot signal, determine a first de-noised channel estimate based on the first noisy channel estimate and the second noisy channel estimate, and determine a de-noised message signal based on the first de-noised channel estimate; and memory coupled to the processing circuitry, the memory configured to store signal information.

Example 17 can include the apparatus of example 16, wherein the first noisy pilot signal is represented as a complex signal, and wherein the processing circuitry is further configured to: determine a first noisy pilot signal channel estimate for a real domain and an imaginary domain.

Example 18 can include the apparatus of any of examples 16 or 17, wherein the processing circuitry is further configured to: determine a window length for a moving average operation; and determine a scaling factor for the moving average operation based on the window length, wherein the first de-noised channel estimate is based on the scaling factor.

Example 19 can include the apparatus of any of examples 16-18, wherein the set of signals is a first set of signals, and wherein the processing circuitry is further configured to: sample a second set of signals to generate the first set of signals, wherein a sampling frequency for the sampling is based on a timing pattern for the first noisy pilot signal and a second noisy pilot signal.

Example 20 can include a method for performing any of the steps of examples 16-19.

Example 21 can include one or more non-transitory computer-readable media having stored thereon a sequence of instructions which, when executed by one or more processors, cause processing circuitry to perform any of the steps of examples 16-19.

Example 22 can include one or more non-transitory computer-readable media having stored thereon a sequence of instructions which, when executed by one or more processors, cause processing circuitry to: process a first noisy pilot signal and a second noisy pilot signal from a set of signals; determine a first noisy estimate based on the first noisy pilot signal and a second noisy channel estimate based on the second noisy pilot signal; determine a first de-noised channel estimate based on the first noisy channel estimate and the second noisy channel estimate; and determine a de-noised message signal based on the first de-noised channel estimate.

Example 23 can include the one or more non-transitory computer-readable media of example 22, wherein the sequence of instructions which, when executed by one or more processors, cause processing circuitry to: determine a channel estimate for the noisy message signal based on a linear interpolation of the first de-noised channel estimate and a second de-noised channel estimate, wherein the de-noised message signal is further based on the channel estimate for the noisy message signal.

Example 24 can include the one or more non-transitory computer-readable media of any of examples 22 or 23, wherein the sequence of instructions which, when executed by one or more processors, cause processing circuitry to: determine a first BER prior to processing the set of signals; determining a second BER after determining the de-noised message signal; and transmitting, to a satellite, a message to update a density of pilot signals for a downlink transmission.

Example 25 can include a method for performing any of the steps of examples 22-24.

Example 26 can include an apparatus comprising: processing circuitry configured to perform any of the steps of examples 22-24 and memory coupled to the processing circuitry, the memory configured to store signal information.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

**Claims**

1.  A method comprising:

    processing a set of signals comprising a first noisy pilot signal, a second noisy pilot signal, and a noisy message signal;
    determining a first noisy channel estimate based on the first noisy pilot signal and a second noisy channel estimate based on the second noisy pilot signal;
    determining a first de-noised channel estimate based on the first noisy channel estimate and the second noisy channel estimate; and
    determining a de-noised message signal based on the first de-noised channel estimate.

2.  The method of claim 1, wherein method further comprises:
    determining a channel estimate for the noisy message signal based on a linear interpolation of the first de-noised channel estimate and a second de-noised channel estimate, wherein the de-noised message signal is further based on the channel estimate for the noisy message signal.

3.  The method of any of claims 1-2, wherein the method further comprises:
    identifying a second de-noised channel estimate based on a convolution-based moving average, wherein the de-noised message signal is further determined based on the second de-noised channel estimate.

4.  The method of claim 3, wherein the method further comprises:

    determining a window length for a convolution-based moving average; and
    determining a scaling factor for the convolution-based moving average based on the window length, wherein the first de-noised channel estimate is based on the scaling factor.

5.  The method of any of claims 1-4, wherein processing the set of signals to identify the first noisy pilot signal and the second noisy pilot signal comprises:
    identifying a timing pattern for the set of signals, wherein the first noisy pilot signal and the second noisy pilot signal are identified based on the timing pattern.

6.  The method of any of claims 1-5, wherein the set of signals is a first set of signals, and wherein the method further comprises:
    sampling a second set of signals to generate the first set of signals; wherein a sampling frequency for the sampling is based on a timing pattern for the first noisy pilot signal and a second noisy pilot signal.

7.  The method of any of claims 1-6, wherein the method further comprises:

    determining a first block error rate (BLER) prior to processing the set of signals;
    determining a second BLER after determining the de-noised message signal; and
    transmitting, to a satellite, a message to update a density of pilot signals for a downlink transmission.

8.  The method of any of claims 1-7, wherein a noise of the first noisy pilot signal is based on an additive white Gaussian noise (AWGN).

9.  The method of any of claims 1-8, wherein the set of signals comprises a plurality of noisy pilot signals including the first noisy pilot signal and the second noisy pilot signal, and wherein the plurality of noisy pilot signals are equally spaced apart in a time domain.

10. The method of any of claims 1-9, wherein a plurality of noisy message signals are located between the first de-noised channel estimate and a second de-noised channel estimation, and wherein the method further comprises:
    determining a plurality of channel estimates based on the plurality of noisy message signals.

11. The method of any of claims 1-10, wherein determining a de-noised message signal based on the first de-noised channel estimate is based on an interpolation operation using:

$$y = y_0 + \frac{(y_1 - y_0) - (x - x_o)}{x_1 - x_0},$$

where y is a channel estimate for a noisy message signal, $y_0$ is a first channel estimate, $y_1$ is a second channel estimate, x is a time point for the noisy message signal, $x_0$ is a time point for the first channel estimate, and $x_1$ is a time point for the second channel estimate.

12. An apparatus comprising:

processing circuitry configured to:

identify a first noisy pilot signal and a second noisy pilot signal from a set of signals,
determine a first noisy pilot signal channel estimate based on the first noisy pilot signal and a second noisy pilot signal channel estimate based on the second noisy pilot signal,
determine a first de-noised channel estimate based on the first noisy channel estimate and the a second noisy pilot signal channel estimate, and
determine a de-noised message signal based on the first de-noised channel estimate; and

memory coupled to the processing circuitry, the memory configured to store signal information.

13. The apparatus of claim 12, wherein the first noisy pilot signal is represented as a complex signal, and wherein the processing circuitry is further configured to:
determine a first noisy pilot signal channel estimate for a real domain and an imaginary domain.

14. One or more non-transitory computer-readable media having stored thereon a sequence of instructions which, when executed by one or more processors, cause processing circuitry to:

process a first noisy pilot signal and a second noisy pilot signal from a set of signals;
determine a first noisy estimate based on the first noisy pilot signal and a second noisy channel estimate based on the second noisy pilot signal;
determine a first de-noised channel estimate based on the first noisy channel estimate and the second noisy channel estimate; and
determine a de-noised message signal based on the first de-noised channel estimate.

15. The one or more non-transitory computer-readable media of claim 14, wherein the sequence of instructions which, when executed by one or more processors, cause processing circuitry to:
determine a channel estimate for the noisy message signal based on a linear interpolation of the first de-noised channel estimate and a second de-noised channel estimate, wherein the de-noised message signal is further based on the channel estimate for the noisy message signal.

100

Satellite 106

Pilot Signal

Data

Pilot Signal

Channel Estimation Unit 108

| Noisy Pilot Estimation Unit 110 | De-Noising Unit 112 | Interpolation Unit 114 |

Satellite Dish 104

User Equipment 102

**FIG. 1**

200 —

**Transmitter 202**

Waveform Generation and Pilot Embedding Unit 208 → First Pulse Shaping Unit 210

AWGN 206

**Receiver 204**

Second Pulse Shaping Unit 212 → FO/TO/SO Recovery Unit 214 → Channel Estimation Unit 106 → Waveform Recovery Unit 216

**FIG. 2**

Input Data →

Channel Estimation Unit 108

Noisy Pilot Estimation Unit 110

De-Noising Unit 112

Interpolation Unit 114

→ Channel Estimate (h)

300 ⮝

FIG. 3

400

First Noisy Pilot Signal 404

Noisy Message Signal 406

Second Noisy Pilot Signal 406

Received Samples 402

First Noisy Pilot Estimate 412

Second Noisy Pilot Estimate 414

Third Noisy Pilot Estimate 418

Fourth Noisy Pilot Estimate 420

Moving Window at T0

Noisy Pilot Channel Estimates 410

Moving Window at T1

1st Channel Estimate 422 (Moving window at T0)

Denoised Channel Estimates 416

2nd Channel Estimate (Moving window at T1) 424

**FIG. 4**

FIG. 5

600 ◄

1st Channel
Estimate 422

Message Signal
Channel Estimate
602

2nd Channel
Estimate 424

$Y_0$   $Y$   $Y_1$

$X_0$   $X$   $X_1$

**FIG. 6**

700

Process a set of signals comprising a first noisy pilot signal, a second noisy pilot signal, and noisy message signal **702**

Determine a first noisy channel estimate based on the first noisy pilot signal and a second noisy channel estimate based on the second noisy pilot signal **704**

Determine a first de-noised channel estimate based on the noisy pilot signal channel estimate and the second noisy pilot signal channel estimate **706**

Determine a de-noised message signal based on the first de-noised channel estimate **708**

**FIG. 7**

800 ◄—

```
┌─────────────────────────────────────────┐
│  Process a set of signals comprising a   │
│  first noisy pilot signal associated     │
│  with a first subcarrier, a second noisy │
│  pilot signal associated with a second   │
│  subcarrier, and a noisy message         │
│  signal 802                              │
└─────────────────────────────────────────┘
                    │
                    ▼
┌─────────────────────────────────────────┐
│  Determine a first noisy channel         │
│  estimate in a frequency domain          │
│  based on the first noisy pilot signal   │
│  and a second noisy channel estimate     │
│  in the frequency domain based on the    │
│  second noisy pilot signal 804           │
└─────────────────────────────────────────┘
                    │
                    ▼
┌─────────────────────────────────────────┐
│  Determine a first de-noised channel     │
│  estimate based on the first noisy       │
│  channel estimate and the second noisy   │
│  channel estimate                        │
│  806                                     │
└─────────────────────────────────────────┘
                    │
                    ▼
┌─────────────────────────────────────────┐
│  Determine a de-noised message signal    │
│  based on the first de-noised channel    │
│  estimate 808                            │
└─────────────────────────────────────────┘
```

FIG. 8

FIG. 9

**FIG. 10**

EP 4 708 785 A1

**FIG. 11**

**Europäisches Patentamt**
**European Patent Office**
**Office européen des brevets**

# EUROPEAN SEARCH REPORT

**Application Number**

EP 25 19 9903

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZOUROB MOHAMMED ET AL: "2x1-D fast Fourier transform interpolation for LTE-A OFDM pilot-based channel estimation", 2017 INTERNATIONAL CONFERENCE ON ELECTRICAL AND COMPUTING TECHNOLOGIES AND APPLICATIONS (ICECTA), IEEE, 21 November 2017 (2017-11-21), pages 1-5, XP033293924, DOI: 10.1109/ICECTA.2017.8251938 [retrieved on 2018-01-08] * Section III * | 1-15 | INV. H04L25/02 |
| X | US 2010/158141 A1 (HEWAVITHANA THUSHARA [LK] ET AL) 24 June 2010 (2010-06-24) * paragraph [0042] - paragraph [0068]; figure 4 * | 1-3, 5-13,15 | |
| X | ZOUROB MOHAMMED ET AL: "Hybrid Lower-Complexity Wiener Filter for Pilot-Based Channel Estimation for C-RS in LTE-A DL System", MOBILE NETWORKS AND APPLICATIONS, SPRINGER US, NEW YORK, vol. 23, no. 4, 2 November 2017 (2017-11-02), pages 921-939, XP036567049, ISSN: 1383-469X, DOI: 10.1007/S11036-017-0964-0 [retrieved on 2017-11-02] * Section 3 * | 1-15 | |

**TECHNICAL FIELDS SEARCHED (IPC)**

H04L

The present search report has been drawn up for all claims

| Place of search | Date of completion of the search | Examiner |
|---|---|---|
| Munich | 2 December 2025 | Epple, Ulrich |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9903

This annex lists the patent family members relating to the patent documents cited in the above-mentioned European search report.
The members are as contained in the European Patent Office EDP file on
The European Patent Office is in no way liable for these particulars which are merely given for the purpose of information.

02-12-2025

| Patent document cited in search report | Publication date | Patent family member(s) | Publication date |
|---|---|---|---|
| US 2010158141 A1 | 24-06-2010 | CN 101789925 A | 28-07-2010 |
| | | EP 2200238 A2 | 23-06-2010 |
| | | JP 5087606 B2 | 05-12-2012 |
| | | JP 2010158003 A | 15-07-2010 |
| | | US 2010158141 A1 | 24-06-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 82549924